# EUROPÄISCHE PATENTSCHRIFT

(11) **EP 0 671 129 B1**
(45) Veröffentlichungstag und Bekanntmachung des Hinweises auf die Patenterteilung: **31.10.2001**
(21) Anmeldenummer: 95102852.1
(22) Anmeldetag: 01.03.1995
(51) Int. Cl.: A23L 3/22, A23C 3/037

(54) **Verfahren und Vorrichtung zur lebensmitteltechnischen Produktbehandlung**
Process and apparatus for treatment of products in the food industry
Procédé et appareil de traitement de produits dans l'industrie alimentaire

(30) Priorität: 12.03.1994 DE 4408464
(43) Veröffentlichungstag der Anmeldung: 13.09.1995
(73) Patentinhaber: Finnatec Prozessanlagen Gmbh, 79664 Wehr (DE)
(72) Erfinder: Finnah, Josef, 48683 Ahaus (DE)
(74) Vertreter: Stenger, Watzke & Ring Patentanwälte

(56) Entgegenhaltungen:
- EP-A- 0 435 822
- BE-A- 645 112
- DE-C- 807 811
- FR-A- 1 342 824
- FR-A- 1 379 179
- FR-A- 2 606 598
- GB-A- 1 233 196
- GB-A- 2 137 070
- US-A- 2 712 504

## Beschreibung

Die Erfindung betrifft ein Verfahren zur lebensmitteltechnischen Behandlung von Lebensmittelprodukten, wobei das Produkt in wenigstens einer Verfahrensphase mittels Dampf direkt erhitzt wird. Weiterhin betrifft die Erfindung eine Vorrichtung zur Durchführung des Verfahrens.

Mittels Thermisierung, Pasteurisierung, Ultra-Hocherhitzung oder Sterilisierung wird seit Jahrzehnten die Haltbarkeitsverlängerung bzw. die Haltbarmachung von Produkten praktiziert, wobei es sich um Produkte der verschiedensten Arten handeln kann, jedoch vorrangig um Lebensmittelprodukte. Die Praxis kennt vorrangig zwei Erhitzungsarten, und zwar die direkte Erhitzung bzw. die indirekte Erhitzung. Bei der direkten Erhitzung wird wiederum nach zwei Verfahren unterschieden, und zwar das Injektions- bzw. das Diffusionsverfahren. Beim Injektionsverfahren wird direkt in den Produktstrom Dampf, je nach Temperaturwahl in verschiedensten Temperaturhöhen injiziert, wogegen es sich beim Diffusionsverfahren um einen mit Dampf gefüllten Behälter handelt, indem, je nach Art des Verfahrens, Produkt als Film oder gesprühtes Produkt durch den mit Sattdampf gefüllten Behälter geführt wird. So können die Produkte die Dampftemperatur annehmen und sich erwärmen.

Bei der direkten Erhitzung, sei es durch Injektions- oder Diffusionsverfahren, wird das Produkt mit Dampf vermischt, wodurch eine Reduzierung der Trockenmasse des Produktes entsteht. Die entsprechende Dampf- bzw. Wassermenge wird im Entspannungskühler dem Produkt wieder entzogen. Dadurch fällt die Temperatur schlagartig entsprechend der Entspannung ab. Die Entnahme des Kondensats bzw. Wassers bedarf einer genauen Steuerung, um eine ungewollte Reduzierung oder Erhöhung der Trockenmasse des Produktes zu vermeiden. Der Dampf muß von hoher Qualität sein, damit, bedingt durch die Injektion oder Diffusion des Dampfes, keine Verfälschungen, Geschmacksbeeinflussungen usw. des Produktes entstehen. Der Vorteil des Verfahrens ist, daß man mittels dieser Erhitzung eine rasche Temperaturerhöhung und -absenkung von einer ausgewählten Ausgangstemperatur bis zur Höchsttemperatur und der Endtemperatur erzielen kann, wodurch, trotz der Wärmebehandlung, nur eine geringe Qualitätsminderung des Produktes entsteht.

Ein Nachteil des Verfahrens liegt in der Entspannungskühlung, bei der ggf. eine Produktschädigung erfolgen kann. Dies kann zum einen durch sichtbare Zerstörung z. B. stückiger Anteile des Produktes der Fall sein oder durch unsichtbare Zerstörung von z. B. Stabilisatoren oder ähnlich kleinen Bestandteilen des Produktes, wobei sich deren Beschädigung zunächst nicht sichtbar, aber später durch verminderte Produktqualität bemerkbar machen kann.

Beim indirekten Erhitzungsverfahren haben sich in der Praxis in erster Linie Platten- oder Röhrenerhitzer bewährt, wo im Gegenstrom zum Produkt, getrennt durch eine Materialwand, ein Austauschermedium fließt bzw. Dampf strömt, um die Wärme über die Wärmetauscherwand dem jeweilig zu behandelnden Produkt zugeführt wird.

Bei dem indirekten Verfahren ist der Vorteil gegeben, daß keinerlei Dampf oder sonstiges Austauschermedium direkt dem Produkt zugeführt oder entnommen wird. Durch etwas längere Aufheiz- oder Rückkühlphasen kann eine leicht höhere Qualitätsminderung je nach Wahl der Temperaturen entstehen. Je nach Wahl des Wärmetauschersystems und je nach Wahl der Wärmerückgewinnung können die Produkte mehr oder weniger durch das Erhitzungsverfahren in ihrer Qualität beeinträchtigt werden.

In der "Processing and Packaging of Heat Preserved Food Ed. J.A.G. Rees and J. Bettisoon, lackie, Glasgow Seiten 50 bis 68 (1991)" ist beschrieben, das Lebensmittelprodukt zunächst in einem indirekten Wärmetauscherverfahren zu erwärmen, dann einem Dampfinjektionsverfahren zu unterziehen und anschließend in einem indirekten Wärmetauscherverfahren wieder abzukühlen.

Ein Nachteil aller vorbekannten Verfahren besteht in der ungünstigen Energieausnutzung. Die vielfach erforderlichen Temperaturänderungen machen einen umfangreichen Energieeinsatz erforderlich. Darüber hinaus müssen die Verfahren sehr aufwendig gesteuert werden, beispielsweise damit bei der Dampfinjektion nur die zur Erhitzung erforderliche Menge eingeleitet wird, ohne das der Gesamtwasserhaushalt des Produktes gestört wird. Unter Umständen müssen auch noch Nachbehandlungen erfolgen.

Davon ausgehend liegt der vorliegenden Erfindung die **Aufgabe** zugrunde, ein gattungsgemäßes Verfahren dahingehend zu verbessern, daß es wirksam, wirtschaftlich und einfach durchführbar ist. Darüber hinaus soll eine Vorrichtung zur Durchführung des Verfahrens angegeben werden.

Zur technischen **Lösung** dieser Aufgabe ist das erfindungsgemäße Verfahren dadurch gekennzeichnet, daß das dem Produkt in der Erhitzungsphase in Form von Dampf zugeführte Wasser dem Produkt in einer vorhergehenden Verfahrensphase entzogen wird.

Insgesamt wird mit dem erfindungsgemäßen Verfahren ein Verfahren geschaffen, welches zum einen eine wirksame Behandlung des Produktes aufgrund der schnellen und direkten Erhitzung ermöglicht, so daß die gewünschte Haltbarkeitsverlängerung bzw. Haltbarmachung des Produktes sehr effektiv erreicht werden kann.

Bei einer aus dem Stand der Technik bekannten Entspannungskühlung des Produktes wird dem Produkt Feuchtigkeit entnommen, so daß eine recht aufwendige Berechnung erforderlich ist, wie groß die zunächst dem Produkt zugeführte Wassermenge sein muß. Demgegenüber ist das erfindungsgemäße Verfahren wesentlich einfacher durchzuführen.

Das erfindungsgemäße Verfahren ist zudem auch wirtschaftlich günstiger und preiswerter, da nicht eine bestimmte Wassermenge mitbehandelt werden muß, die später dem Produkt wieder entzogen wird und die lediglich technisch erforderlich ist, um beim Entspannungskühlen und dem damit verbundenen Feuchtigkeitsverlust dem Produkt die gewünschte Trockenmasse zu garantieren. Selbst bei Produkten, die vor der Behandlung einen optimalen Gehalt an Trockenmasse aufweisen, müssen für die Behandlung zusätzliche Wassermengen zugesetzt werden, wobei anschließend eine gleichgroße Wassermenge entzogen wird. Dabei kann jedoch nicht sichergestellt werden, daß exakt das zunächst zugesetzte Wasser später wieder entzogen wird, sondern es wird lediglich eine gleichgroße Wassermenge entzogen.

Dies bedeutet, daß in der Regel ein Austausch stattfindet und daß beim Entspannungskühlen Produkt eigene Wasseranteile dem Produkt entzogen werden, während Anteile der zugeführten Fremdwassermenge im Produkt verbleiben. Die Feuchtigkeitsbilanz bleibt dadurch gewahrt, jedoch ist dabei nicht ausgeschlossen, daß es zu geschmacklichen oder anderen Veränderungen und ggf. Beeinträchtigungen des Produktes kommt.

Das erfindungsgemäße Verfahren stellt daher eine möglichst hohe Produktqualität und eine möglichst geringe Veränderung der Produkteigenschaften sicher.

Die Wirtschaftlichkeit des erfindungsgemäßen Verfahrens kann insbesondere dadurch gesteigert werden, daß das zu verdampfende Wasser, welches später in das Produkt injiziert werden soll, dort vom Produkt vorgeheitzt wird, wo das Produkt seine höchste Temperatur aufweist. Auf diese Weise muß weniger Energie zur Verdampfung des Wassers aufgewendet werden und andererseits auch weniger Energie aufgewendet werden, die ein ausschließliches Abkühlen des Produktes bewirkt.

Erfindungsgemäß können wahlweise Produkte mit bereits endgültigem Wassergehalt oder Produkte mit noch vermindertem Wassergehalt der Behandlung unterzogen werden, wobei durch die Dampfinjektion dem Produkt der endgültige Feuchtigkeitsgehalt bzw. der endgültige Gehalt an Trockenmasse eingestellt wird. Gegebenenfalls muß bei dem Produkt ein technischer Wassergehalt eingestellt werden. Ein nachgeschalteter Entspannungskühler ist daher in keinem Fall erforderlich, um beispielsweise die Produkttemperatur abzusenken oder um beispielsweise dem Produkt Wasser zu entziehen.

Die Lebensmittel werden bei der erfindungsgemäßen Behandlung sowohl geschont, wenn es sich um homogene Lebensmittel handelt, als auch, wenn es sich um stückige Lebensmittel oder um Produkte mit stückigen Anteilen handelt. Da sowohl makroskopische als auch mikroskopische Beschädigungen, wie sie bei einer Entspannungskühlung auftreten können, vermieden werden.

Besonders hygienisch ist das erfindungsgemäße Verfahren und die dementsprechende Vorrichtung, da Reinfektionen ausgeschlossen werden können, die bei der Entspannungskühlung und in den dafür erforderlichen Pumpen auftreten können.

Vorrichtungsseitig wird zur technischen **Lösung** der Aufgabe eine Vorrichtung zur lebensmitteltechnischen Behandlung von Lebensmittelprodukten mit wenigstens einem Dampferzeuger und wenigstens einem Dampfinjektor dadurch weitergebildet, daß dieser einen dem Dampfinjektor vorgeschaltete Wasserentzugsvorrichtung aufweist.

In vorteilhafter Weise ist die Wasserentzugsvorrichtung mit dem Dampferzeuger verbunden, so daß dem Produkt entzogene Wasser direkt zu Dampf verarbeitet werden kann. Mit besonderem Vorteil ist zwischen der Wasserentzugsvorrichtung und dem Dampferzeuger wenigstens ein Wärmetauscher angeordnet, der seinerseits vom Produktfluß her dem Dampfinjektor nachgeschaltet ist. Das dem Produkt zunächst entzogene Wasser wird also im Wärmeaustausch mit dem Produkt, welches hocherhitzt aus dem Dampfinjektor kommt, erwärmt und dann dem Dampferzeuger zugeführt.

Mit Vorteil wird weiterhin angegeben, daß der Dampferzeuger in direkter Nähe zum Dampfinjektor angeordnet ist. Insbesondere soll mit der Erfindung auch das Entstehen von Energieverlusten weitestgehend vermieden werden, so daß alle Leitungen möglichst kurz gehalten werden.

Eine verbesserte Funktionssicherheit der Anlage sowie ein verbesserter Schutz des Lebensmittels wird dadurch bewirkt, daß die erfindungsgemäßen Vorrichtungen unabhängig von der Gesamtdampfversorgung eines Betriebes ausgebildet sein können, so daß durch Schäden an der Gesamtdampfversorgung keine Produktionsbeeinträchtigungen und keine Produktbeeinträchtigungen entstehen können. Dies gilt ohnehin für die Verfahrensweise, bei der dem Produkt zunächst eigenes Wasser entzogen und ausschließlich dieses Wasser anschließend verdampft und dem Produkt injiziert wird. Aber auch bei der Verdampfung von Fremdwasser ist eine Unabhängigkeit von der Gesamtdampfversorgung eines Lebensmittel verarbeitenden Betriebes dann möglich, wenn der Dampferzeuger dem Dampfinjektor unmittelbar benachbart ist.

Dies führt weiterhin zu Einsparungen, da nicht das Kesselwasser für die gesamte Dampfversorgung des Betriebes der hohen lebensmittelgerechten Qualität entsprechen muß, sondern lediglich das Wasser, welches für die Erhitzung des Produktes benötigt wird und dem Produkt als Fremdwasser zugeführt wird und im Produkt verbleibt.

Es handelt sich bei der Erfindung um zwei Alternativen, die je nach Produkt eingesetzt werden können. Hierbei ist zugrundezulegen, daß es Produkte gibt, die bereits in der natürlichen Form gewonnen werden und keiner Verfälschung oder Veränderung unterliegen dürfen. Desweiteren gibt es Produkte, die von den Herstellern erst durch Zusammenführen verschiedener Komponenten oder Erzeugnisse zu dem gewünschten Endprodukt gemischt werden. Jedes Produkt hat einen bestimmten Wassergehalt, der bereits durch die natürliche Gewinnung in dem Produkt enthalten sein kann oder beim Mischen verschiedener Komponenten des Produktes hinzugegeben wird. Bei der zugrundeliegenden Erfindung wird nach zwei verschiedenen Behandlungsarten unterschieden, und zwar Produkte, die aus verschiedenen Komponenten zusammengemischt werden und Produkte, die natürlich gewonnen werden.

Weitere Vorteile und Merkmale der Erfindung ergeben sich aus der folgenden Beschreibung anhand der Figuren. Dabei zeigen:
- Fig. 1: ein Fließschema eines Behandlungsablaufes mit Produkten aus verschiedenen Komponenten, die gemischt werden und durch die Wärmebehandlung in der Trockenmasse reduziert, also mit Flüssigkeit angereichert werden und
- Fig. 2: eine Produktbehandlung eines Produktes, das bereits bei der natürlichen Gewinnung eine bestimmte Wassermenge enthält und bei dem auch das Produkt nicht verändert werden kann oder darf.

Vorab sei erwähnt, daß alle Fließlinien, die nicht unterbrochen wurden, Produktfließlinien (Produktfließwege) sind. Alle strichpunktierten Linien sind Fließwege des regenerativen Wärmetauschermediums oder Austauschermediums, das noch nicht einer höheren Temperatur ausgesetzt wurde. Alle gestrichelten Linien sind Fließwege des Kühlwassers. Alle gepunkteten Linien sind Fließwege des Dampfes.

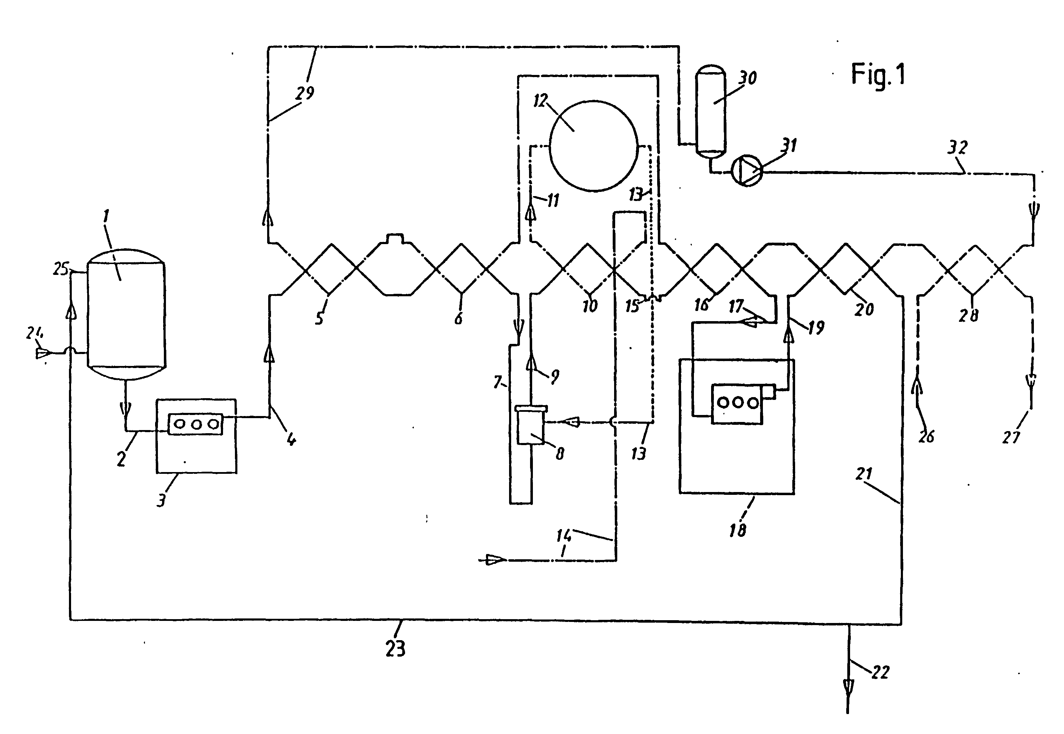

Anhand Figur 1 wird das Wärmetauscherprinzip erläutert.

Das Produkt, das einer Wärmebehandlung unterzogen werden soll, kommt gemäß Figur 1 über die Produktzuführleitung 24 in das Produktvorlaufgefäß 1 und gelangt über das Produktrohr 2 zur Produktförderpumpe 3, über das Produktrohr 4 zum ersten Wärmetauscher 5, zum Wärmetauscher 6, durch das Produktrohr 7 zum Dampfinjektor 8, durch das Produktrohr 9, das gleichzeitig als Heißhalter dient, zum Wärmetauscher 10, über das Produktrohr 15 zum Wärmetauscher 16, durch das Produktrohr 17 zur weiteren Förderpumpe 18 die auch als Homogenisieranlage ausgelegt sein kann, über das Produktrohr 19 zum Wärmetauscher 20, durch das Produktrohr 21 zum Produktrohr 22, wo es der Weiterverwendung in Form von weiteren Behandlungen oder Abfüllungen zugeführt werden kann. Überschüssige Produktmengen oder Produktrücklaufmengen gelangen hingegen durch das Produktrohr 23 zum Produktzuführstutzen 25, wodurch das Produkt dann in den Vorlaufbehälter 1 zurückfließt.

Das Austauschermedium wird vom Puffergefäß 30 über die Pumpe 31 durch das Wärmetauschermediumrohr 32 zum Wärmetauscher 28, der als Kühler dient, geleitet, gelangt in den eigentlichen Produktwärmetauscher 20, weiterhin in den Produktwärmetauscher 16, 6, und 5 und wird über Austauschermediumrohr 29 dem Puffergefäß 30 wieder zugeführt.

Über das Wasserrohr 14 gelangt das Wasser in den Produktwärmetauscher 10 in das Heißwasserrohr 11, in den Dampferzeuger 12, in das Dampfrohr 13 und wird dem Injektor 8 zugeführt.

Über das Kühlwasserrohr 26 gelangt das Kühlwasser in den Wärmetauscher 28 und wird über das Kühlwasserrohr 27 weitergeleitet.

Dies ist eine Produktbehandlung bzw. Produkterwärmung über einen Dampfinjektor, bei dem das Produkt von seiner Trockenmasse her noch nicht den vollen Wassergehalt hat, jedoch über den Dampfinjektor 8, je nach Produktart und -temperatur, Dampf injiziert wird, der anschließend kondensiert und im Produkt als zusätzliche Wassermenge verbleibt. Besonders hervorzuheben ist hierbei, daß das für die Dampfinjektion benötigte Wasser im Wärmetauscher 10 dem heißen Produkt entgegenströmt, nahezu bis auf eine geringe Temperaturdifferenz (geringes Delta t) die Produkttemperatur annimmt, eine Wärmeenergiezufuhr mittels Dampferzeuger 12 erfährt, über Heißdampfrohr 13 dem Dampfinjektor 8 zugeführt wird, wodurch eine hohe Energieeinsparung eintritt. Im Normalfall würde bei den bisher bekannten Verfahren das Kesselspeisewasser mit Normaltemperatur, d. h. etwa 10 - 15 ° C, dem Kessel zugeführt . Der Kessel würde die Wassermenge, die benötigt wird, aufnehmen, und Dampf erzeugen. Dieser Dampf würde über Heißdampfleitung 13 dem Dampfinjektor 8 zugeführt.

Für den Dampfinjektor 8 des Erhitzungsverfahrens wird nur die Menge Wasser der Trinkwasserqualität entsprechend zu Dampf erhitzt, die für die Erhitzung der Produktmenge erforderlich ist. Lange dampfführende Rohre, die, wenn sie auch isoliert sind, Energieverluste einbringen, bedingt durch die täglich auftretenden Wechseltemperaturen Spannungen hervorrufen, mit Verschmutzungen wie Zunder oder sonstigen Ablagerungen behaftet sind oder mit Schmutzfiltern vor Eintritt in das Erhitzungssystem bestückt werden müssen, sind bei dem beschriebenen System nicht erforderlich. Ein separater Dampferzeuger 12, der unmittelbar am Injektor 8 plaziert ist, ist bezogen auf den Arbeitsablauf verfügbar.

Besondere Vorteile durch den Wegfall des Entspannungskühlers entstehen abgesehen von dem hohen Aufwand, der durch den Einsatz eines Entspannungskühlers mit Pumpen entsteht, dadurch, daß eine Energierückgewinnung möglich wird. Die hochsensiblen Produkte, besondere jene mit stückigen Anteilen, werden auf diese Weise nicht zerstört. Ebenso treten bei der raschen Rückkühlung keine höheren Wärmeschädigungen auf, was für die Qualitätserhaltung von besonderer Bedeutung ist.

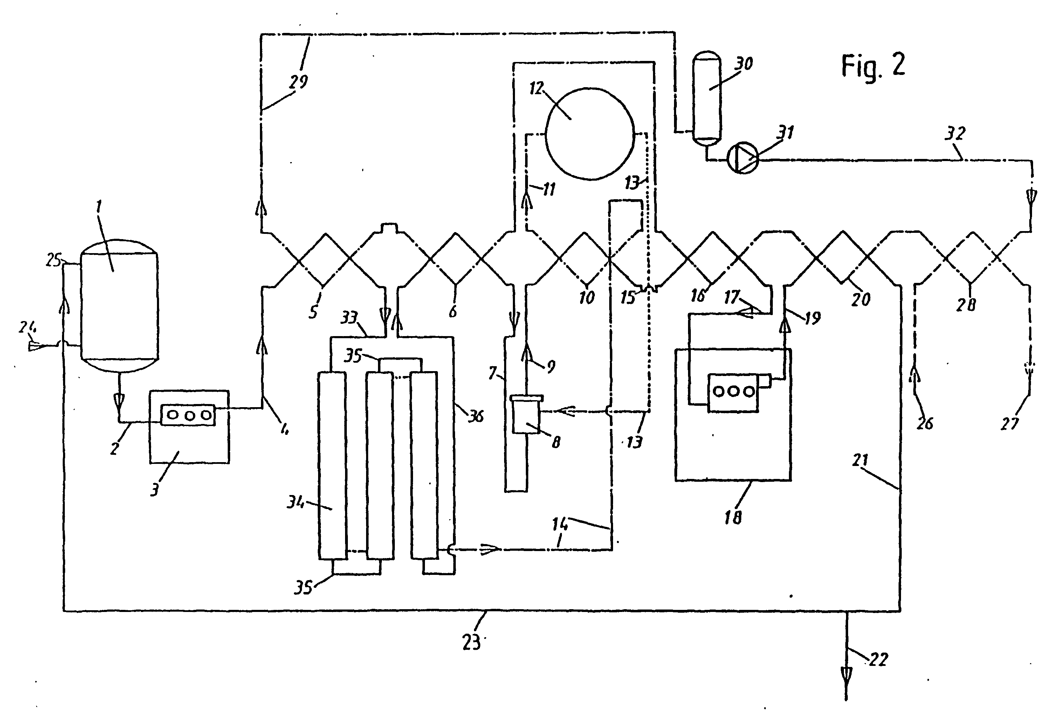

Unter Bezug auf Figur 2 wird nun das Prinzip der Wassergehaltsteuerrung erläutert.

Anzumerken ist, daß die Linienführung des Fließschemas die gleiche Bedeutung hat wie bei Fig. 1.

Die Fließwegerläuterung ist so, daß über Produktrohr 24 dem Vorlaufbehälter 1 das Produkt zugeführt wird. Über Produktrohr 2 und Produktförderpumpe 3 sowie Produktrohr 4 gelangt das Produkt in den ersten Wärmetauscher 5. Über Produktrohr 33 gelangt das Produkt in ein Wasserentzugssystem 34, das eine Umkehrosmose, Ultraosmose, Nanofiltration, Ultrafiltration, Eindampfung oder sonstiges Wasserentzugssystem sein kann, über die Produktrohre als Umschaltbögen 35 in weitere Wasserentzugssysteme, über das Produktrohr 36 in den Wärmetauscher 6, durch Produktrohr 7 in den Dampfinjektor 8, durch Produktrohr 9, das gleichzeitig als Heißhalter dient, in den Wärmetauscher 10, durch Produktrohr 15 in den Wärmetauscher 16, durch Produktrohr 17 in die Produktförderpumpe 18, die auch als Homogenisieranlage ausgelegt sein kann, durch Produktrohr 19 in den Wärmetauscher 20, durch Produktrohr 21 zum Produktrohr 22, wo das Produkt der Weiterverwendung, sei es durch weitere Veredlungen oder Abfüllungen, zugeführt werden kann. Die überschüssige Produktmenge gelangt durch Produktrohr 23 und Schaltbogen 25 in den Vorlaufbehälter 1 zurück.

Über das Puffergefäß 30 für das Austauschermedium gelangt das Austauschermedium über Pumpe 31 durch das Wärmetauscherrohr 32 in den Wärmetauscher 28, der als Kühler dient, in den Produktwärmetauscher 20, 16, 6 und 5, durch Wärmetauscherrohr 29 zum Puffergefäß 30 zurück. Das über das System 34 dem Produkt entzogene Wasser gelangt über das Wasserrohr 14 in den Wärmetauscher 10, durch das Heißwasserrohr 11 in den Dampferzeuger 12, ins Dampfrohr 13 und wird dem Dampfinjektor 8 zugeführt.

Produkte, die bereits durch ihre natürliche Gewinnung, durch gesetzliche Bestimmungen oder durch besondere Verfahrensabläufe ihren vollen Wassergehalt haben, können bei diesem System, ohne daß durch den Dampfinjektor 8 überschüssiges Wasser und besonders betont Fremdwasser zugeführt wird, einer direkten Dampfinjektion und somit einer raschen Erhitzung des Produktes dadurch unterzogen werden, daß mittels des Wasserentzugssystems 34 durch Wasserrohr 14 dem Wärmetauscher 10 das erforderliche Wasser zugeführt wird, welches durch den Wärmeaustausch auf die nahezu gewünschte Erhitzungstemperatur vorerhitzt wird, über Heißwasserrohr 11, einen Dampferzeuger 12 und über das Dampfrohr 13 dann als Dampf dem Dampfinjektor 8 zugeführt wird. Dadurch schließt sich der Produktkreislauf wieder.

Die Verfahrensabläufe und deren Temperaturen können, je nach Technologie des Wasserentzugssystems 34, auch in anderer Form den technologischen Erfordernissen entsprechend gestaltet werden. Auch bleibt technologisch offen, welche Wassermenge entzogen wird, die dann nachher über das Dampfrohr 13 dem Dampfinjektor 8 zugeführt wird. Desweiteren bleibt offen, wie rasch ein Produkt nach der Dampfinjektion einer Rückkühlung und deren Intensität unterzogen wird. Zwischen Wärmetauscher 10 und 16 kann mittels eines zusätzlichen Kühlers eine noch raschere Rückkühlung erzielt werden.

### Bezugszeichenliste:

- 1: Produktvorlaußgefäß
- 2: Produktrohr
- 3: Produktföderpumpe
- 4: Produktrohr
- 5: Wärmetauscher
- 6: Wärmetauscher
- 7: Produktrohr
- 8: Dampfinjektor
- 9: Produktrohr
- 10: Wärmetauscher
- 11: Heißwasserrohr
- 12: Dampferzeuger
- 13: Dampfrohr
- 14: Wasserrohr
- 15: Produktrohr
- 16: Wärmetauscher
- 17: Produktrohr
- 18: Förderpumpe
- 19: Produktrohr
- 20: Wärmetauscher
- 21: Produktrohr
- 22: Produktrohr
- 23: Produktrohr
- 24: Produktzuführleitung
- 25: Produktzuführstutzen
- 26: Kühlwasserrohr
- 27: Kühlwasserrohr
- 28: Wärmetauscher
- 29: Wärmetauschermediumrohr
- 30: Puffergefäß
- 31: Pumpe
- 32: Wärmetauschermediumrohr
- 33: Produktrohr
- 34: Wasserentzugssystem
- 35: Umschaltbogen
- 36: Produktrohr

## Patentansprüche

1. Verfahren zur lebensmitteltechnischen Behandlung von Lebensmittelprodukten, wobei das Produkt in wenigstens einer Verfahrensphase mittels Dampf direkt erhitzt wird, wobei das dem Produkt in der Erhitzungsphase in Form von Dampf zugeführte Wasser dem Produkt in einer vorhergehenden Verfahrensphase entzogen wird,
**dadurch gekennzeichnet,**
**daß** das zu Dampf zu verarbeitende Wasser vor der Verdampfung einem Wärmeaustausch mit dem durch Dampf erhitzten Produkt zugeführt wird.

2. Vorrichtung zur Durchführung des Verfahrens nach Anspruch 1 mit wenigstens einem Dampferzeuger und wenigstens einem Dampfinjektor, wobei diese eine dem Dampfinjektor vorgeschaltete Wasserentzugsvorrichtung aufweist, dadurch gekennzeichet, daß zwischen der Wasserentzugsvorrichtung und dem Dampferzeuger wenigstens ein Wärmetauscher angeordnet ist, der dem Dampfinjektor nachgeschaltet ist.

3. Vorrichtung nach Anspruch 2, **dadurch gekennzeichnet, daß** die Wasserentzugsvorrichtung mit dem Dampferzeuger verbunden ist.

4. Vorrichtung nach einem der Ansprüche 2 oder 3, **dadurch gekennzeichnet, daß** der Dampferzeuger in unmittelbarer Nähe zum Dampfinjektor angeordnet ist.

## Claims

1. Process for the technological treatment of food products, the product being heated directly by steam in at least one processing phase, the water supplied to the product in the form of steam in the heating phase being removed from the product in a preceding processing phase,
**characterized in that** the water to be processed to steam is fed prior to the evaporation to a heat exchange with the steam-heated product.

2. Apparatus for carrying out the process according to Claim 1 having at least one steam generator and at least one steam injector, these having a water removal apparatus upstream of the steam injector,
**characterized in that** at least one heat exchanger is disposed between the water removal apparatus and the steam generator, which heat exchanger is connected downstream of the steam injector.

3. Apparatus according to Claim 2, **characterized in that** the water removal apparatus is connected to the steam generator.

4. Apparatus according to either of Claims 2 or 3,
**characterized in that** the steam generator is arranged in the immediate vicinity of the steam injector.

## Revendications

1. Procédé destiné au traitement technique de produits alimentaires, le produit étant chauffé directement à la vapeur dans au moins une phase de procédé, l'eau amenée à l'état de vapeur au produit dans la phase de chauffage étant extraite du produit dans une phase de procédé précédente,
**caractérisé en ce que**, l'eau à transformer en vapeur est soumise avant évaporation à un échange de chaleur avec le produit chauffé à la vapeur.

2. Dispositif destiné à la mise en oeuvre du procédé selon la revendication 1, avec au moins un générateur de vapeur et au moins un injecteur de vapeur, et comportant un dispositif d'extraction d'eau placé en amont de l'injecteur de vapeur, **caractérisé en ce que**, entre le dispositif d'extraction d'eau et le générateur de vapeur, il est disposé au moins un échangeur de chaleur qui est placé en aval de l'injecteur de vapeur.

3. Dispositif selon la revendication 2,
**caractérisé en ce que** le dispositif d'extraction d'eau est relié au générateur de vapeur.

4. Dispositif selon l'une des revendications 2 ou 3, **caractérisé en ce que** le générateur de vapeur est disposé à proximité immédiate de l'injecteur de vapeur.
